# EUROPÄISCHE PATENTSCHRIFT

(11) **EP 1 915 611 B1**
(45) Veröffentlichungstag und Bekanntmachung des Hinweises auf die Patenterteilung: **30.09.2009**
(21) Anmeldenummer: 06776930.7
(22) Anmeldetag: 15.08.2006
(51) Int. Cl.: G01N 23/04

(54) **COMPUTERTOMOGRAFIE-MESSANORDNUNG UND VERFAHREN**
COMPUTER TOMOGRAPHY MEASURING DEVICE AND METHOD
DISPOSITIF DE MESURE DE SCANOGRAPHIE ET PROCEDE ASSOCIE

(30) Priorität: 16.08.2005 DE 102005039422
(43) Veröffentlichungstag der Anmeldung: 30.04.2008
(73) Patentinhaber: Carl Zeiss Industrielle Messtechnik GmbH, 73447 Oberkochen (DE)
(72) Erfinder: POGLITSCH, Christof, 73434 Aalen (DE); LONARDINI, Ronald, 73463 Westhausen (DE)
(74) Vertreter: Brunotte, Joachim Wilhelm Eberhard
(86) Internationale Anmeldenummer: PCT/EP2006/008134
(87) Internationale Veröffentlichungsnummer: WO 2007/020095

(56) Entgegenhaltungen:
- EP-A2- 0 461 776
- DE-A1- 3 924 066
- US-A- 4 422 177
- US-A- 5 119 408
- US-A- 5 228 071
- KANG S T ET AL: "A projection method for reconstructing X-ray images of arbitrary cross-section" NDT & E INTERNATIONAL, BUTTERWORTH-HEINEMANN, OXFORD,, GB, Bd. 32, Nr. 1, Januar 1999 (1999-01), Seiten 9-20, XP004292640 ISSN: 0963-8695

## Beschreibung

Die Erfindung betrifft eine Computertomografie (CT)-Messanordnung, die mittels invasiver Strahlung Durchstrahlungsbilder (und daraus insbesondere Volumenabbildungen und/oder Volumenmessdaten) von Messobjekten erzeugt, z. B. eine Röntgenstrahlungs-CT-Messanordnung. Die Erfindung betrifft weiterhin ein Verfahren zum Durchführen einer Computertomografie, insbesondere ein Verfahren zum Vorbereiten einer Computertomografie-Messung.

Die Verwendung invasiver Strahlung für die Untersuchung von Werkstücken ist bekannt. Bei der Computertomografie (CT) wird das Werkstück beispielsweise in der Regel auf einem Drehtisch angeordnet und durch Drehung des Drehtisches in verschiedene Drehstellungen aus verschiedenen Richtungen von Röntgenstrahlung durchstrahlt. Die durch Extinktion in dem Material des Werkstücks geschwächte Strahlung wird orts- und zeitaufgelöst von einer Sensoreinrichtung detektiert. In der Praxis werden beispielsweise zwischen 800 und 1.200 Projektionsbilder des Messobjekts aufgenommen, wobei zwischen jeder der Projektionen die Drehstellung um einen konstanten Drehwinkelbetrag verändert wird. Durch die Anwendung eines von mehreren bekannten Verfahren der tomografischen Rekonstruktion, z.B. der gefilterten Rückprojektion, wird daraus ein dreidimensionales Bild des Werkstücks berechnet. Das 3D-Bild gibt jeweils für einzelne kleine Volumenbereiche (Voxel) den lokalen linearen Absorptionskoeffizienten an. Ein Beispiel für die CT wird in DE 39 24 066 A1 beschrieben.

Die Abbildungsqualität bei der Aufnahme von Projektionsbildem hängt bei Zentralprojektionen, die von einer nahezu punktförmigen Strahlungsquelle ausgehen, insbesondere von der gewählten Vergrößerung ab, d. h. davon, wie groß der Bereich der auf die Detektionseinrichtung auftreffenden Strahlung ist, die das Messobjekt durchdrungen hat.

Der Nutzer einer solchen CT-Messanordnung hat daher darauf zu achten, dass das Messobjekt vor und nach Drehungen um die Drehachse des Drehtischs jeweils ein möglichst großes Projektionsbild erzeugt und dass das Messobjekt dabei jeweils vollständig auf die Detektionsfläche der Detektionseinrichtung abgebildet wird.

Eine entsprechende Positionierung des Messobjekts wird üblicherweise manuell durchgeführt: nachdem das Messobjekt in einer bestimmten Drehstellung richtig positioniert wurde, wird es in einer anderen Drehstellung wiederum positioniert. Dabei ergibt sich häufig ein iterativer Prozess. Der Aufwand hierbei wird noch dadurch erhöht, dass bei Messanordnungen mit Röntgenstrahlung Personen-Schutzvorkehrungen getroffen sind. Beispielsweise muss jeweils eine Messkabine vor der Positionierung geöffnet und nach der Positionierung wieder geschlossen werden.

Das Dokument US 5 228 701 A beschreibt eine Messanordnung für Computer-Tomografie die folgendes aufweist:
- eine Strahlungsquelle zur Erzeugung einer Röntgenstrahlung,
- eine Dreheinrichtung , die derart ausgestaltet und angeordnet ist, dass ein Messobjekt um eine Drehachse der Dreheinrichtung gedreht werden kann und dass auf diese Weise die invasive Strahlung aus verschiedenen Richtungen das Messobjekt durchdringen kann, und
- eine Detektionseinrichtung zur Detektion von Strahlung, die das Messobjekt durchdrungen hat,
- eine Positioniereinrichtung, wobei die Positioniereinrichtung eine Einstelleinrichtung aufweist, die ausgestaltet ist, eine Position des Messobjekts relativ zu der Dreheinrichtung einzustellen.

Es ist eine Aufgabe der vorliegenden Erfindung, ein Verfahren und eine Messanordnung anzugeben, die es ermöglichen, bei CT-Messanordnungen möglichst große Projektionsbilder zu erhalten, wobei der Aufwand für eine Positionierung des Messobjekts gering sein soll.

Es wird vorgeschlagen, eine Positioniereinrichtung zu verwenden, durch die das Messobjekt in der Messanordnung positioniert werden kann. Insbesondere wird eine Messanordnung für Computer-Tomografie (CT) gemäß Anspruch 1.

Die Messanordnung dient (im Gegensatz zu Messanordnungen für medizinische Zwecke) insbesondere dazu, ein handwerklich und/oder industriell hergestelltes Messobjekts zu vermessen. Insbesondere ist der Messplatz, an dem das Messobjekt bei der Messung anzuordnen ist, entsprechend ausgestaltet. Alternativ oder zusätzlich ist die Positioniereinrichtung ausgestaltet, lediglich nicht lebende Objekte zu positionieren. Beispielsweise kann die Positioniereinrichtung eine Halterung zum Halten des Objekts aufweisen, die das Messobjekt vorzugsweise einklemmt. Dadurch kann das Messobjekt dauerhaft und reproduzierbar relativ zu der Halterung fixiert werden.

Von dem Begriff invasive Strahlung ist Strahlung jeglicher Art umfasst, die das Messobjekt durchdringt. Außer elektromagnetischer Strahlung - wie z. B. Röntgenstrahlung - kann auch Partikelstrahlung (etwa Elektronenstrahlung oder Positronenstrahlung) eingesetzt werden. Auch kann elektromagnetische Strahlung in anderen Wellenlängenbereichen (etwa im sichtbaren oder Infrarotwellenlängenbereich) verwendet werden. Es wird häufig außer der eigentlichen Messstrahlung auch Strahlung aus Sekundäreffekten (wie Anregung von Energiezuständen, z. B. Lumineszenz) oder Streustrahlung detektiert. Derartige Strahlung ist üblicherweise als "Untergrund" oder Rauschen in den Messsignalen vorhanden.

Bei einer bevorzugten Art der Untersuchung des Messobjekts wird elektromagnetische Strahlung verwendet, die das Messobjekt durchdringt und auf der gegenüberliegenden Seite der Strahlungsquelle von der örtlich auflösenden Sensoreinrichtung detektiert wird. Die Messanordnung ist insbesondere so ausgestaltet, dass die von der Strahlungsquelle erzeugte invasive Strahlung das Messobjekt durchdringt und in der Art einer Zentralprojektion ein Projektionsbild generiert.

Weiterhin wird bevorzugt, dass die elektromagnetische Strahlung Röntgenstrahlung oder Gammastrahlung (harte Röntgenstrahlung) ist, die im Energiebereich von 0,5 keV bis 50 MeV liegt. Besonders bevorzugt wird Röntgenstrahlung im Energiebereich von 2 keV bis 700 keV.

Bei der Verwendung von Röntgenstrahlungsquellen mit kleinem Brennfleck kann die Quelle der invasiven Strahlung als nahezu punktförmig angenommen werden. Eine derartige Messanordnung mit nahezu punktförmiger Strahlungsquelle wird ebenfalls besonders bevorzugt. Beispielsweise wird eine Röntgenstrahlungsquelle mit einem Brennfleck-Durchmesser im Bereich von 5 bis 100 Mikrometer verwendet. Quellen dieser Art erzeugen in der Regel polychromatische Röntgenstrahlung, z. B. im Energiebereich von 10 bis 450 keV. Im Hinblick auf den im Vergleich zu dem Brennfleck-Durchmesser in der Regel wesentlich größeren Abstand zum Messobjekt und zu der Detektionseinrichtung (in der Größenordnung von einigen zehn Zentimetern bis mehr als einem Meter) kann der Brennfleck als punktförmig bezeichnet werden. Die mit der Detektionseinrichtung aufgenommenen Bilder (oder die entsprechenden Bilddaten) enthalten Informationen über die Intensität der Röntgenstrahlung, die das Messobjekt durchlaufen hat. Aus diesen Informationen kann in an sich bekannter Weise für jedes Pixel des Bildes der so genannte kumulative Absorptionskoeffizient berechnet werden. Die so erhaltenen Bilder entsprechen auf Grund der punktförmigen Strahlungsquelle Zentralprojektionen (das Projektionszentrum koinzidiert mit der Strahlungsquelle) einer Materialeigenschaft (des lokalen Extinktionskoeffizienten) des Messobjekts, da die von der Strahlungsquelle emittierte invasive Strahlung ein divergierendes Strahlenbündel bildet.

Insbesondere kann die Erfindung mit Vorteil angewendet werden, wenn das Durchstrahlungsbild einer Messgeometrie entspricht, die das Durchstrahlungsbild durch eine von einer punktförmigen Strahlungsquelle ausgehende Zentralprojektion erzeugt. Der Begriff "entspricht" bedeutet dabei, dass das Durchstrahlungsbild tatsächlich durch eine Zentralprojektion erzeugt wurde oder dass das Durchstrahlungsbild (z. B. durch Ablenkung der invasiven Strahlung vor und/oder nach der Durchstrahlung des Objekts, etwa durch Kollimatoren und/oder Linsen) von einer Messanordnung erzeugt wurde, die einer Zentralprojektion identische Durchstrahlungsbilder erzeugt. Unter einer Zentralprojektion wird verstanden, dass der Weg eines jeden Strahls der invasiven Strahlung von der punktförmigen Strahlungsquelle bis zu der Detektionseinrichtung eine gerade Linie ist. Als punktförmig wird eine Strahlungsquelle auch dann bezeichnet, wenn der Entstehungsbereich der Strahlung oder ein Bereich, den sämtliche für die Projektion verwendete Strahlung durchlaufen muss, in Anbetracht der Gesamt-Geometrie der Messanordnung so klein ist, dass der Bereich als näherungsweise punktförmig aufgefasst werden kann.

Insbesondere ist die Strahlungsquelle ausgestaltet, ein kegelförmiges divergierendes Strahlenbündel zu erzeugen, das in Richtung der Detektionseinrichtung emittiert wird. Dabei hängt die Qualität (oder zumindest der Aufwand für eine Korrektur) des Rekonstruktionsergebnisses, das aus den in den verschiedenen Drehstellungen aufgenommenen Projektionsbildem erhalten wird, davon ab, wie genau die ein bezüglich des kegelförmigen Strahlenbündels zentraler Strahl die Drehachse der Dreheinrichtung senkrecht kreuzt. Vorzugsweise wird eine derartige senkrechte Kreuzung im Wesentlichen erreicht.

Mit der Positioniereinrichtung ist das Messobjekt nun vorzugsweise so zu positionieren (bezüglich der Drehachse zu zentrieren) dass die Drehachse die gemeinsame Linie von zwei zueinander senkrecht verlaufenen Schnittebenen des Messobjekts ist, wobei die Drehachse in beiden Schnittebenen in der Mitte zwischen gegenüberliegenden Außenrändern und/oder äußeren Oberflächenpunkten des Messobjekts verläuft.

Durch die Einstelleinrichtung, die die Position des Messobjekts relativ zu der Dreheinrichtung einstellen kann, ist dieses Ziel (oder auch jegliche andere Positionierung des Messobjekts) auf vereinfachte Weise und außerdem mit höherer Genauigkeit erreichbar. Der Nutzer der Messanordnung muss die Position nicht mehr dadurch per Hand einstellen, dass er den Gegenstand auf einem Drehtisch versetzt. Nunmehr kann insbesondere reproduzierbar dieselbe Position wieder eingestellt werden und/oder kann eine vordefinierte Veränderung der Position durchgeführt werden. Bevorzugtermaßen ist für die Positioniereinrichtung oder zumindest für eine Steuereinrichtung zur Steuerung der Einstelleinrichtung ein ein- oder mehrdimensionales Koordinatensystem definiert oder zumindest eine Skalierung vorgesehen, so dass Koordinaten oder Skalierungswerte einer Position und/oder für eine Positionsänderung vorgegeben werden können und von der Einstelleinrichtung die entsprechende Position eingestellt werden kann bzw. die entsprechende Positionsänderung durchgeführt werden kann.

Zur Einstellung der Position des Messobjekts mit Hilfe der Positioniereinrichtung sind drei verschiedene Verfahren denkbar, die im Folgenden beschrieben werden und als "rein manuell", "halbautomatisch" und "vollautomatisch" bezeichnet werden. In allen drei Fällen ist das Messobjekt vorzugsweise fest mit einem Teil der Positioniereinrichtung verbunden, beispielsweise in der Positioniereinrichtung eingespannt, etwa in der Art eines Schraubstocks oder das Messobjekt verändert aus anderen Gründen seine Relativposition zu dem Teil der Position der Einrichtung nicht unbeabsichtigt (z. B. weil es fest auf dem Teil steht). Es sind jedoch auch andere Ausgestaltungen möglich, z.B. die Verwendung von Anschlägen, die an einem Oberflächenbereich des Messobjekts anliegen, wobei zumindest ein Anschlag beweglich ist und die Position des Anschlags und/oder dessen Orientierung relativ zu der Dreheinrichtung verändert werden kann.

Bei der rein manuellen Einstellung der Position wird die Einstelleinrichtung per Hand betätigt, beispielsweise durch Drehen einer Gewindestange.

Bei der halbautomatischen Einstellung der Position kann z.B. ein Motor vorgesehen sein, der die Position eines beweglichen Teils der Einstelleinrichtung und damit des Messobjekts verändert. Der Motor wird jedoch von einem Benutzer bedient. Ein Motor hat jedoch den Vorteil, dass beispielsweise eine Steuereinrichtung vorgesehen sein kann. Beispielsweise muss der Benutzer daher lediglich Koordinaten oder Differenzkoordinaten für die Steuereinrichtung vorgeben und die entsprechende Position oder Positionsänderung wird automatisch eingestellt.

Bei der vollautomatischen Einstellung der Position wird ein Positionierungsfehler (definiert als eine Abweichung von einer vorgegebenen Position und einer tatsächlichen Position des Messobjekts) automatisch erkannt und wird eine entsprechende Positionskorrektur vorgenommen. Wiederum können ein oder mehrere der Motoren bei der Einstellvorrichtung vorgesehen sein. Insbesondere kann zur Erkennung eines Positionsfehlers ein Bilderkennungs- und Verarbeitungsverfahren angewendet werden. Ein Bild des Messobjekts wird hierzu von der Detektionseinrichtung der Messanordnung detektiert. In einem folgenden Schritt wird aus den Detektionssignalen ein Bild erzeugt. Nun kann vordefiniert sein, an welcher Stelle des Bildes die Bildwerte (z.B. Grauwerte aus der Auswertung eines Röntgenstrahlungs-Projektionsbildes des Messobjekts) einen bestimmten Grenzwert unterschreiten oder überschreiten dürfen. Hierdurch kann insbesondere unter Berücksichtigung eines erwarteten Bildes des Messobjekts anhand von Planungsdaten (z.B. CAD-Planungsdaten) festgestellt werden, ob das Messobjekt in der momentanen Drehstellung zentriert bezüglich der Drehachse und/oder bezüglich des durch die Detektionseinrichtung erfassbaren Bereiches ist. Die Sollposition kann also insbesondere dadurch definiert sein, dass sich die Außengrenzen in dem Bild des Messobjekts auf beiden Seiten der Drehachse in gleichem Abstand zu der Drehachse befinden. Daher wird vorzugsweise vor oder während der Auswertung des Bildes ermittelt, welche (virtuelle) Linie in dem Bild einer Projektion der Drehachse entspricht. Die Information hierüber kann aus an sich bekannten Kalibrierverfahren erhalten werden. Allgemeiner formuliert kann ein aus Detektionssignalen der Detektionseinrichtung erzeugtes Projektionsbild des Messobjekts ausgewertet werden und kann aus dem Projektionsbild ein Positionsfehler des Messobjekts ermittelt werden.

Die Bilderkennung und Bildauswertung kann nicht nur bei dem vollautomatischen Verfahren durchgeführt werden, sondern z. B. auch Grundlage für das halbautomatische Verfahren sein. Wird entweder bei dem halbautomatischen Verfahren oder bei dem vollautomatischen Verfahren eine Steuereinrichtung zur Steuerung der Einstelleinrichtung verwendet, bzw. ist eine solche Steuereinrichtung bei der Messanordnung vorgesehen, ist die Steuereinrichtung vorzugsweise Teil einer Steuereinheit der gesamten Messanordnung. Die Steuereinrichtung kann z. B. in Software und/oder Hardware eines Steuerungscomputers der Messanordnung implementiert sein.

Vorzugsweise weist die Einstelleinrichtung zumindest eine Positioniereinheit aufweist, die ausgestaltet ist, die Position des Messobjekts lediglich entlang einer geraden Achse einzustellen. Dadurch kann eine gezielte, von anderen Positionsfehlern unabhängige Korrektur durchgeführt werden.

Besonders bevorzugt wird, dass die Einstelleinrichtung zumindest zwei, vorzugsweise drei der Positioniereinheiten aufweist, wobei die geraden Achsen der Positioniereinheiten quer und vorzugsweise senkrecht zueinander verlaufen.

Die Einstelleinrichtung kann elektrisch betätigbar sein, wobei zumindest eine elektrische Leitung zur Versorgung der Einstelleinrichtung mit elektrischem Strom eine elektrische Verbindung aufweist, die einen ersten Teil der Leitung, der in und/oder an der Dreheinrichtung angeordnet ist, mit einem zweiten Teil der Leitung verbindet, der in und/oder an der Positioniereinrichtung angeordnet ist. Auf diese Weise ist ein kompakter Aufbau möglich, ohne störende, frei liegende elektrische Leitungen. Insbesondere können so auch Messeartefakte vermieden werden, die das Material solcher Leitungen im Bild erzeugen können.

Vorzugsweise ist die Einstelleinrichtung elektrisch betätigbar, wobei zumindest eine elektrische Leitung zur Versorgung der Einstelleinrichtung mit elektrischem Strom vorgesehen ist, wobei die elektrische Leitung über zumindest einen elektrischen Schleifkontakt führt, der bei bestehendem elektrischen Kontakt eine Bewegung zumindest eines Teils der Positioniereinrichtung relativ zu einem anderen Teil der Positioniereinrichtung und/oder zu der Dreheinrichtung erlaubt.

Ein weiterer Aspekt der Erfindung betrifft die Ermittlung der gegenwärtigen Position und/oder Ausrichtung des Messobjekts in der Messanordnung. Es wird vorgeschlagen, Strahlung (elektromagnetische Strahlung und/oder Partikelstrahlung) für die Bestimmung der gegenwärtigen Position zu verwenden. Einerseits kann die von der Strahlungsquelle der Messanordnung auch bei der eigentlichen Vermessung erzeugte Art von Strahlung verwendet werden. Z.B. wird in einer separaten Positionsmessung die Strahlungsquelle betrieben und wird von der Detektionseinrichtung der Messanordnung ein Projektionsbild des Messobjekts erzeugt. Die so erhaltene Bildinformation kann beispielsweise in der oben beschriebenen vollautomatischen Variante des Verfahrens zur Positionsbestimmung verwendet werden.

Alternativ oder zusätzlich wird vorgeschlagen, eine zweite Strahlungsquelle zusätzlich zu der eigentlichen Strahlungsquelle der Messanordnung vorzusehen. Diese zweite Strahlungsquelle kann beispielsweise Strahlung erzeugen, die sich auf ihrem Weg zu dem Messobjekt parallel zu der Strahlung ausbreitet, die während der eigentlichen Vermessung des Messobjekts von der ersten Strahlungsquelle generiert würde. Anders ausgedrückt kann eine zentrale Achse der von der zweiten Strahlungsquelle erzeugten Strahlung sich parallel zu einer zentralen Achse (z.B. der Achse des Strahlenkegels) der von der ersten Strahlungsquelle während des normalen Messbetriebes erzeugten Strahlung erstrecken. Der entsprechende Versatz (oder ein anderer Versatz der Strahlung aufgrund der Tatsache, dass sich die zweite Strahlungsquelle nicht am Ort der ersten Strahlungsquelle befindet) kann bei der Auswertung berücksichtigt werden.

Eine zweite Möglichkeit, einen Versatz zu kompensieren, ist die Verwendung einer Mehrzahl von zweiten Strahlungsquellen, die symmetrisch in Bezug auf die Detektionseinrichtung und in Bezug auf die zentrale Achse der von der ersten Strahlungsquelle erzeugten Strahlung positioniert und ausgerichtet sind. Beispielsweise werden zwei der zweiten Strahlungsquellen rechts und links in gleichem Abstand von der ersten Strahlungsquelle positioniert. Diese zweiten Strahlungsquellen ermöglichen es, ein Projektionsbild des Messobjekts auf der Detektionseinrichtung oder auf einer zusätzlichen, zweiten Detektionseinrichtung zu erzeugen, die z.B. vor der ersten Detektionseinrichtung angeordnet ist und die empfindlich für die Strahlung der zweiten Strahlungsquellen ist.

Eine weitere Möglichkeit der Verwendung einer zweiten Strahlungsquelle ist die Einkopplung der von der zweiten Strahlungsquelle erzeugten Strahlung in den Strahlengang, der während der eigentlichen Vermessung des Messobjekts von der ersten Strahlung genutzt wird. Hierzu können beispielsweise Linsen, Linsensysteme und/oder andere Mittel (z.B. elektromagnetische Felder) zum Beeinflussen der Richtung von Strahlung eingesetzt werden. Hierzu gehören auch Spiegel und andere reflektierende Bauteile, die z.B. den Effekt der Totalreflektion nutzen.

Noch eine weitere Möglichkeit der Nutzung einer zweiten Strahlungsquelle besteht darin, dass die zweite Strahlungsquelle im Strahlengang der ersten Strahlung zwischen der ersten Strahlungsquelle und der Detektionseinrichtung angeordnet wird. Optional können hierbei wiederum z.B. die genannten Mittel zur Beeinflussung der Richtung der sich ausbreitenden Strahlung eingesetzt werden. Vorzugsweise wird so ein Strahlenbündel generiert, dessen Geometrie und Ausbreitungsrichtung möglichst exakt mit der von der ersten Strahlungsquelle generierten Strahlung übereinstimmt.

Unter Nutzung der von der oder den zweiten Strahlungsquelle(n) erzeugten zweiten Strahlung wird vorzugsweise ein Projektionsbild des Messobjekts erzeugt. Z.B. ist, wie oben bereits erwähnt, hierzu eine zweite

Detektionseinrichtung vorgesehen, die beispielsweise unmittelbar vor der ersten Detektionseinrichtung angeordnet ist und nach der Positionierung des Messobjekts optional wieder entfernt werden kann. Es ist jedoch auch denkbar, die erste Detektionseinrichtung sowohl empfindlich für die erste Strahlung als auch empfindlich für die zweite Strahlung auszugestalten.

Die zweite Strahlung kann insbesondere sichtbare Strahlung sein, die somit für den Benutzer völlig ungefährlich ist. Dem liegt die Erkenntnis zugrunde, dass es für die Positionierung ausreichend ist, ein reines Schattenbild des Messobjekts zu generieren, also ein Bild, bei dem keinerlei Strahlung durch das Messobjekt hindurchdringt.

Vorzugsweise wird eine vollständige Positionierung des Messobjekts, d.h. eine Positionierung in zumindest zwei verschiedenen Drehstellungen (z.B. um 90° gegeneinander verdrehte Drehstellungen) vorgenommen.

Als zweite Strahlungsquelle kommen z.B. eine Quecksilberdampflampe, eine Halogenlampe, eine Lampe mit Edelgas (z.B. eine Xenonlampe) und/oder ein Laser infrage. Bei der Verwendung eines Lasers kann alternativ unmittelbar die Position von bestimmten Außenkonturen des Messobjekts relativ zu der Detektionseinrichtung festgestellt werden, wenn der Laserstrahl nicht aufgeweitet wird. In diesem Fall wird bevorzugt, dass eine Vielzahl der Positionen festgestellt wird. Es ist aber auch möglich, den Laserstrahl aufzuweiten und so ein divergierendes Strahlungsbündel wie bei anderen Strahlungsquellen zu erzeugen.

Außerdem wird ein Verfahren zum Durchführen einer Computertomografie (CT) vorgeschlagen, insbesondere ein Verfahren zum Vorbereiten der Aufnahme von Bildern des Messobjekts. Bei der Aufnahme wird das Messobjekt in verschiedenen Drehstellungen bezüglich einer Drehachse von invasiver Strahlung, insbesondere Röntgenstrahlung, durchstrahlt und wird jeweils zumindest ein Durchstrahlungsbild aufgenommen. Zur Vorbereitung der Aufnahme wird eine Relativposition des Messobjekts relativ zu der Drehachse durch Einstellen einer Positioniereinrichtung verändert. Insbesondere kann das Messobjekt dadurch vor der Aufnahme der Durchstrahlungsbilder relativ zu der Drehachse zentriert werden. Unter einer Zentrierung wird verstanden, dass sich zumindest in einer Schnittebene durch das Messobjekt, wobei die Schnittebene die Drehachse enthält, die am weitesten von der Drehachse entfernt liegenden Stellen der Außenkonturen des Messobjekts auf beiden Seiten der Drehachse gleich weit von der Drehachse entfernt liegen. Vorzugsweise wird eine derartige Zentrierung bezüglich zwei der Schnittebenen durchgeführt, wobei die zwei Schnittebenen quer zueinander verlaufen, insbesondere senkrecht zueinander. Auf diese Weise kann eine optimale Ausnutzung der zur Verfügung stehenden Detektionsfläche erreicht werden und damit die maximale Vergrößerung erzielt werden.

Insbesondere kann es sich bei der Positioniereinrichtung, wie oben beschrieben ist und wie noch unter Bezugnahme auf die beigefügte Zeichnung beschrieben wird, um eine Positioniereinrichtung handeln, die zumindest einen ersten Teil aufweist, der ortsfest relativ zu der Drehachse angeordnet ist. Andere Teile der Positioniereinrichtung können relativ zu diesem Teil bewegt werden, sodass das Messobjekt sich ebenfalls relativ zu der Drehachse bewegt. Die Positioniereinrichtung kann sich mit dem ersten Teil z. B. an der oben erwähnten Dreheinrichtung abstützen.

Bei einer bevorzugten Ausgestaltung des Verfahrens werden vorab Durchstrahlungsbilder des Messeobjekts ausgewertet, wobei das Messeobjekts bereits in der Messanordnung angeordnet ist. Die eigentlichen Durchstrahlungsbilder werden aus Detektionssignalen einer Detektionseinrichtung erzeugt. Vor der Aufnahme der Durchstrahlungsbilder, die für eine Untersuchung des Messobjekts ausgewertet werden sollen, wird aus den Detektionssignalen zumindest ein Vorab-Durchstrahlungsbild des Messobjekts ausgewertet und wird aus dem Vorab-Durchstrahlungsbild ein Positionsfehler des Messobjekts ermittelt.

Insbesondere kann das Vorab-Durchstrahlungsbild in folgender Weise genutzt werden: es wird eine Bildposition der Drehachse in dem Vorab-Durchstrahlungsbild ermittelt, die einer Strahlungsprojektion (die Strahlung legt bei der Projektion zum Beispiel einen völlig geradlinigen Weg von der Strahlungsquelle durch das Messeobjekt hindurch bis zu Detektionseinrichtung zurück) der Drehachse auf die Detektionseinrichtung entspricht. Die genaue Position und Ausrichtung der Projektion der Drehachse sind (z. B. in Pixelkoordinaten der Detektionseinrichtung) beispielsweise aus einer Kalibrierung der Messeanordnung bekannt. Durch Auswertung des Vorab-Durchstrahlungsbildes wird nun ermittelt, ob sich in einer Bildebene des Vorab-Durchstrahlungsbildes am weitesten von der Drehachse entfernt liegende Stellen von Außenkonturen des Messobjekts auf beiden Seiten der Drehachse gleich weit von der Drehachse entfernt befinden. Vorzugsweise wird ein derartiger Positionsfehler automatisch korrigiert.

Z. B. wird durch Steuerung der Positioniereinrichtung die Position des Messobjekts automatisch korrigiert, wenn sich die am weitesten entfernt liegenden Stellen der Außenkonturen des Messobjekts auf beiden Seiten der Drehachse nicht gleich weit von der Drehachse entfernt befinden.

Im Folgenden wird die Erfindung anhand von Ausführungsbeispielen näher erläutert, die in den Figuren schematisch dargestellt sind. Die Erfindung ist jedoch nicht auf die Beispiele beschränkt. Gleiche Bezugsziffern in den einzelnen Figuren bezeichnen dabei gleiche oder funktionsgleiche bzw. hinsichtlich ihrer Funktionen einander entsprechende Elemente. Die einzelnen Figuren der Zeichnung zeigen:
- Fig. 1: eine schematische Darstellung einer Messanordnung, mit der Messobjekte mittels invasiver Strahlung untersucht werden können;
- Fig. 2: eine schematische Seitenansicht einer Anordnung mit einem Drehtisch und einer darauf angeordneten Positioniereinrichtung; und
- Fig. 3: die Anordnung gemäß Fig. 2 in perspektivischer Darstellung, wobei zusätzlich ein Messobjekt und eine Röntgenstrahlungsquelle dargestellt sind.

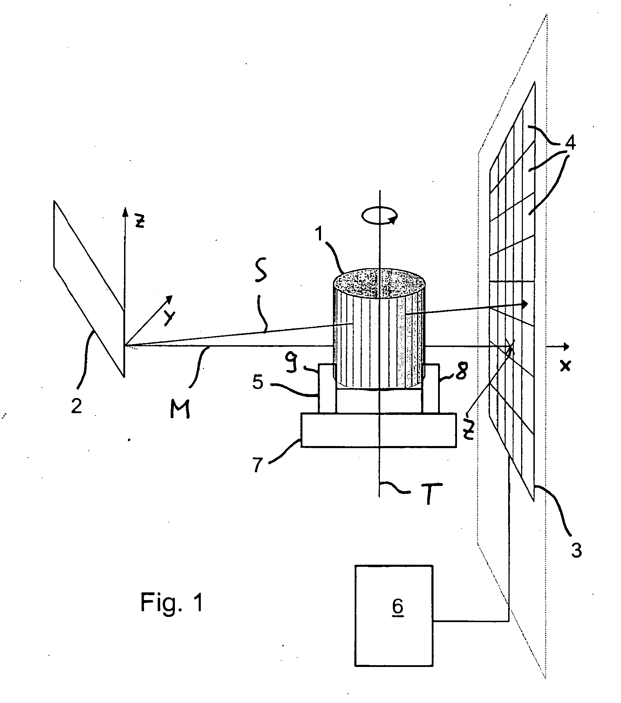

Die in Fig. 1 dargestellte Messanordnung weist ein Messobjekt 1 auf, das im geradlinigen Strahlengang zwischen einer Strahlungsquelle 2, insbesondere einer Röntgen-Strahlungsquelle, und einer Detektionseinrichtung 3 angeordnet ist. Die Detektionseinrichtung 3 weist eine Vielzahl von Detektionselementen 4 auf, so dass eine örtlich aufgelöste Detektion von Strahlung möglich ist. Die Detektionssignale der Detektionselemente 4 werden einer Auswertungseinrichtung 6 zugeleitet, die ein Durchstrahlungsbild des Messobjekts 1 jeweils in einer gegebenen Drehstellung des Messobjekts 1 ermittelt. Das Messobjekt 1 ist mit einer Dreheinrichtung 7 kombiniert, beispielsweise einem Drehtisch. Die Drehachse der Dreheinrichtung 7 ist mit T bezeichnet. Außerdem ist eine Positioniereinrichtung 5 vorgesehen, die es ermöglicht, das Messobjekt 1 relativ zu der Dreheinrichtung zu positionieren.

Vorzugsweise ist die Positioniereinrichtung 5 so ausgestaltet, dass sie separat die Positionierung des Messobjekts 1 in Richtung von drei Koordinatenachsen eines kartesischen Koordinatensystems ermöglicht. Somit kann eine Fehlpositionierung des Messobjekts 1 durch, lineare Bewegung jeweils in Richtung der einzelnen Koordinatenachsen korrigiert werden. Alternativ oder zusätzlich kann die Positioniereinrichtung 5 weitere Positionierbewegungen ermöglichen, z.B. Rotationsbewegungen um eine Drehachse, die nicht mit der Drehachse T der Dreheinrichtung 7 zusammenfällt. Auch können so z.B. Verkippungen des Messobjekts relativ zu einer Drehtischoberfläche korrigiert werden.

Insbesondere ist die Positioniereinrichtung 5, wie in dem Ausführungsbeispiel von Fig. 1 schematisch dargestellt, zwischen einer Oberfläche der Dreheinrichtung 7 (z.B. der Drehtisch-Oberfläche) und einer Unterseite des Messobjekts 1 angeordnet. Es sind jedoch auch andere Anordnungen denkbar. Z.B. kann das Messobjekt von einem Element der Positioniereinrichtung gegriffen werden und sich seitlich von der Positioniereinrichtung wegerstrecken.

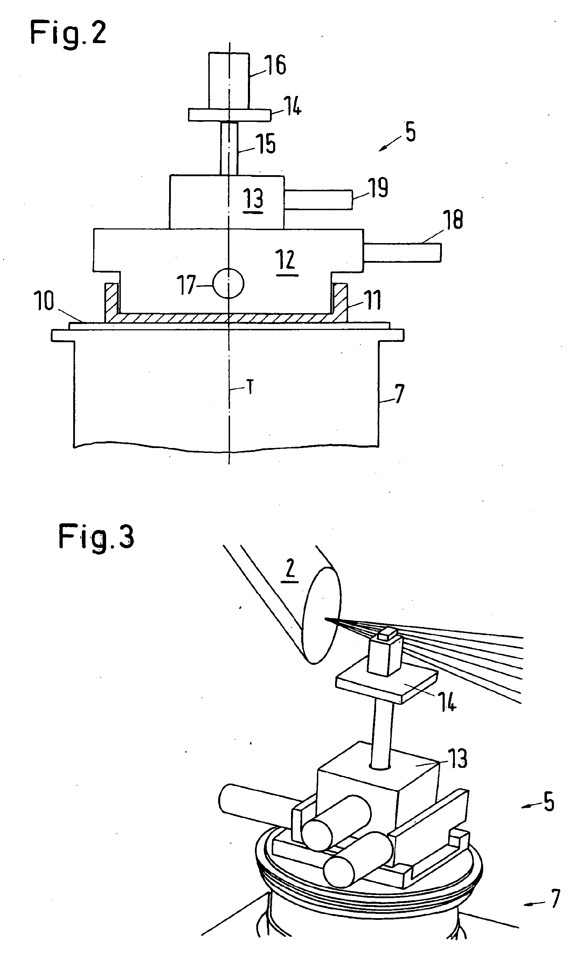

Wie in Fig. 1 durch zwei seitliche Klemmbacken 8, 9 der Positioniereinrichtung 5 angedeutet ist, kann das Messobjekt 1 in der Positioniereinrichtung 5 eingeklemmt sein. Es ist jedoch auch möglich, dass das Messobjekt in anderer Weise an der Positioniereinrichtung angeordnet ist. Z.B. kann das Messobjekt lediglich auf eine Stellfläche der Positioniereinrichtung gestellt werden (siehe z.B. Fig. 3).

In Fig. 1 ist ein kartesisches Koordinatensystem der Messanordnung dargestellt. Die x-Achse erstreckt sich von der in guter Näherung punktförmigen Strahlungsquelle 2 (z.B. dem Brennfleck der Strahlungsquelle) aus durch den Messplatz hindurch, auf dem das Messobjekt angeordnet werden kann, bis zu der Detektionseinrichtung 3. Ein genau entlang der x-Achse entlanglaufender Strahl M der von der Strahlungsquelle 2 erzeugten invasiven Strahlung durchstößt die Detektionseinrichtung 3 an einem Durchstoßpunkt Z, bzw. trifft auf einem entsprechenden Detektionselement auf und wird dort detektiert.

Bevorzugtermaßen handelt es sich bei der Detektionseinrichtung 3 um eine Einrichtung mit einer ebenen Detektionsfläche, auf die die zu detektierende Strahlung auftrifft, wobei die ebene Detektionsfläche senkrecht zu der x-Achse steht. Üblicherweise wird die Drehachse T der Dreheinrichtung 7 so justiert, dass sie senkrecht zu der x-Achse verläuft. Außerdem wird derart justiert, dass die x-Achse die zentrale Achse eines von der Strahlungsquelle 2 erzeugten Strahlungskegels ist. Ein weiterer Strahl des Strahlungskegels ist in Fig. 1 mit dem Bezugszeichen S bezeichnet.

Die y-Achse des Koordinatensystems der Messanordnung erstreckt sich parallel zu der Detektionsebene der Detektionseinrichtung 3, und zwar in horizontaler Richtung. Die z-Achse des Koordinatensystems erstreckt sich ebenfalls parallel zu der Detektionsebene und vorzugsweise außerdem parallel zu der Drehachse T.

Fig. 2 und Fig. 3 zeigen eine bevorzugte Ausführungsform einer Positioniereinrichtung, die ebenfalls mit dem Bezugszeichen 5 bezeichnet ist. In der Seitenansicht gemäß Fig. 2 erkennt man unten einen Drehtisch 7 mit der Drehachse T. Auf der Tischoberfläche 10 ist die Positioniereinrichtung 5 angeordnet. Die Positioniereinrichtung 5 weist ein Bodenelement 11 auf, das ein U-förmiges Profil hat. Ein erstes bewegliches Element 12 kann geradlinig relativ zu dem Bodenelement 11 bewegt werden, und zwar vorzugsweise durch Betätigung eines Motors 17, der beispielsweise über eine Gewindespindel eine Einstellmechanik betätigt. In der Darstellung von Fig. 2 verläuft die Achse der Relativbewegung zwischen dem ersten beweglichen Element 12 und dem Bodenelement 11 senkrecht zur Zeichnungsebene.

Die Positioniereinrichtung 5 weist ein zweites bewegliches Element 13 auf, das relativ zu dem ersten beweglichen Element 12 bewegt werden kann, und zwar geradlinig entlang einer Bewegungsachse, deren Bewegungsrichtung senkrecht zu der Bewegungsrichtung des ersten beweglichen Elements 12 verläuft. In der Darstellung von Fig. 2 verläuft die zweite Bewegungsrichtung horizontal in der Bildebene. Zur Betätigung der Bewegung ist ein zweiter Motor 18 vorgesehen, der beispielsweise wiederum über eine Gewindespindel eine entsprechende Bewegungsmechanik betätigt.

Ferner ist ein drittes bewegliches Element 14 vorgesehen, das insbesondere als plattenförmiges Element ausgestaltet ist. Auf diese Weise ergibt sich eine Art Probentisch bzw. Messobjekt-Tisch. Das dritte bewegliche Element 14 ist über eine sich im Wesentlichen in senkrechter Richtung erstreckende langgestreckte Stütze 15 beweglich mit dem zweiten beweglichen Element 13 verbunden.

Das dritte bewegliche Element 14 und die Stütze 15 erlauben eine geradlinige Bewegung relativ zu dem zweiten beweglichen Element 13. In der Darstellung von Fig. 2 verläuft die Achse der Bewegung in vertikaler Richtung und liegt in der Bildebene. Ein dritter Motor 19 ist an dem zweiten beweglichen Element 13 angeordnet und betätigt die Bewegung des dritten beweglichen Elements 14.

Mit 16 ist in Fig. 2 ein Element bezeichnet, das auf die Oberfläche des dritten beweglichen Elements 14 gestellt werden kann, um die Position des Messobjekts (nicht in Fig. 2 dargestellt, siehe Fig. 3) zu erhöhen. Größer Messobjekte können z.B. jedoch auch direkt auf das dritte bewegliche Element 14 gestellt werden.

Z.B. ist die Positioniereinrichtung so ausgestaltet, dass die Position des Messobjekts in den beiden senkrecht zueinander stehenden horizontalen Richtungen (durch Bewegung des ersten 12 und zweiten 13 beweglichen Elements relativ zu dem Drehtisch einstellbar) um z.B. 150 bis 200 mm, z.B. um 160 mm, verstellbar ist. Weiterhin ist die Positioniereinrichtung 5 beispielsweise so ausgestaltet, dass das Messobjekt in vertikaler Richtung (durch Bewegung des dritten beweglichen Elements 14) um 15 bis 25 mm, z.B. um 20 mm, verstellt werden kann.

Allgemeiner formuliert sollte das Messobjekt bezogen auf das Koordinatensystem der Messanordnung (siehe Fig. 1) in der y-Richtung und in der z-Richtung um etwa die Hälfte der Breite bzw. Höhe der Ausdehnung desjenigen Bereichs verstellt werden können, in dem die Detektionseinrichtung Strahlung empfangen und detektieren kann. Dabei kann es sich bei der Detektionseinrichtung z.B. um eine ortsfest angeordnete Einrichtung mit einer Detektionsfläche handeln oder alternativ um einen scannenden Sensor.

Vorzugsweise ist die Positioniereinrichtung möglichst klein und kompakt gebaut, um die Auswirkung von geometrischen Fehlern und Unsteifigkeiten der Einrichtung auf das Ergebnis der Bilduntersuchung zu minimieren.

## Patentansprüche

1. Messanordnung für Computer-Tomografie (CT), wobei die Messanordnung Folgendes aufweist:
- eine Strahlungsquelle (2) zur Erzeugung einer invasiven Strahlung, insbesondere von Röntgenstrahlung,
- eine Dreheinrichtung (7), die derart ausgestaltet und angeordnet ist, dass ein Messobjekt (1) um eine Drehachse (T) der Dreheinrichtung (7) gedreht werden kann und dass auf diese Weise die invasive Strahlung aus verschiedenen Richtungen das Messobjekt (1) durchdringen kann, und
- eine Detektionseinrichtung (3) zur Detektion von Strahlung, die das Messobjekt (1) durchdrungen hat,
- eine Positioniereinrichtung (5), wobei die Positioniereinrichtung (5) eine Einstelleinrichtung (17, 18, 19) aufweist, die ausgestaltet ist, eine Position des Messobjekts (1) relativ zu der Dreheinrichtung (7) einzustellen,
**dadurch gekennzeichnet, dass** die Messanordnung ausgestattet ist,
a) aus Detektionssignalen der Detektionseinrichtung (3) zumindest ein Vorab-Durchstrahlungsbild des Messobjekts zu erzeugen,
b) eine Bildposition der Drehachse (T), die einer Strahlungsprojektion der Drehachse (T) auf die Detektionseinrichtung (3) entspricht, in dem Vorab-Durchstrahlungsbild zu ermitteln,
c) durch Auswertung des Vorab-Durchstrahlungsbildes zu ermitteln, ob sich in einer Bildebene des Vorab-Durchstrahlungsbildes am weitesten von der Drehachse (T) entfernt liegende Stellen von Außenkonturen des Messobjekts auf beiden Seiten der Drehachse (T) gleich weit von der Drehachse (T) entfernt befinden.

2. Messanordnung nach dem vorhergehenden Anspruch, wobei die Messanordnung eine Steuereinrichtung zur Steuerung der Einstelleinrichtung aufweist und wobei die Messanordnung ausgestaltet ist, die Position des Messobjekts automatisch zu korrigieren, wenn sich die am weitesten entfernt liegenden Stellen der Außenkonturen des Messobjekts auf beiden Seiten der Drehachse nicht gleich weit von der Drehachse entfernt befinden.

3. Messanordnung nach einem der vorhergehenden Ansprüche, wobei die Strahlungsquelle (2) ausgestaltet ist, ein kegelförmiges divergierendes Strahlenbündel zu erzeugen, das in Richtung der Detektionseinrichtung (3) emittiert wird.

4. Messanordnung nach dem vorhergehenden Anspruch, wobei ein bezüglich des kegelförmigen Strahlenbündels zentraler Strahl die Drehachse (T) der Dreheinrichtung (7) senkrecht kreuzt.

5. Messanordnung nach einem der vorhergehenden Ansprüche, wobei die Positioniereinrichtung (5) eine Einstelleinrichtung (17, 18, 19) aufweist, die ausgestaltet ist, eine Position des Messobjekts (1) relativ zu der Dreheinrichtung (7) einzustellen.

6. Messanordnung nach dem vorhergehenden Anspruch, wobei die Einstelleinrichtung (17, 18, 19) zumindest eine Positioniereinheit aufweist, die ausgestattet ist, die Position des Messobjekts (1) lediglich entlang einer geraden Achse einzustellen.

7. Messanordnung nach dem vorhergehenden Anspruch, wobei die Einstelleinrichtung (17, 18, 19) zumindest zwei, vorzugsweise drei der Positioniereinheiten aufweist und wobei die geraden Achsen der Positioniereinheiten quer und vorzugsweise senkrecht zueinander verlaufen.

8. Messanordnung nach einem der drei vorhergehenden Ansprüche, wobei die Einstelleinrichtung (17, 18, 19) elektrisch betätigbar ist, wobei zumindest eine elektrische Leitung zur Versorgung der Einstelleinrichtung mit elektrischem Strom eine elektrische Verbindung aufweist, die einen ersten Teil der Leitung, der in und/oder an der Dreheinrichtung (7) angeordnet ist, mit einem zweiten Teil der Leitung verbindet, der in und/oder an der Positioniereinrichtung (5) angeordnet ist.

9. Messanordnung nach einem der vorhergehenden Ansprüche, wobei die Einstelleinrichtung (17, 18, 19) elektrisch betätigbar ist, wobei zumindest eine elektrische Leitung zur Versorgung der Einstelleinrichtung mit elektrischem Strom vorgesehen ist, wobei die elektrische Leitung über zumindest einen elektrischen Schleifkontakt führt, der bei bestehendem elektrischen Kontakt eine Bewegung zumindest eines Teils der Positioniereinrichtung relativ zu einem anderen Teil der Positioniereinrichtung (5) und/oder zu der Dreheinrichtung (7) erlaubt.

10. Verfahren zum Durchführen einer Computertomografie (CT), wobei ein Messobjekt (1) in verschiedenen Drehstellungen bezüglich einer Drehachse (T) von invasiver Strahlung, insbesondere Röntgenstrahlung, durchstrahlt wird und jeweils zumindest ein Durchstrahlungsbild aufgenommen wird, wobei eine Relativposition des Messobjekts (1) relativ zu der Drehachse (T) durch Einstellen einer Positioniereinrichtung (5) verändert wird, wobei die Durchstrahlungsbilder aus Detektionssignalen einer Detektionseinrichtung (3) erzeugt werden und wobei
- vor der Aufnahme der Durchstrahlungsbilder, die für eine Untersuchung des Messobjekts (1) ausgewertet werden sollen, aus den Detektionssignalen zumindest ein Vorab-Durchstrahlungsbild des Messobjekts ausgewertet wird,
- eine Bildposition der Drehachse (T), die einer Strahlungsprojektion der Drehachse (T) auf die Detektionseinrichtung (3) entspricht, in dem Vorab-Durchstrahlungsbild ermittelt wird und
- durch Auswertung des Vorab-Durchstrahlungsbildes ermittelt wird, ob sich in einer Bildebene des Vorab-Durchstrahlungsbildes am weitesten von der Drehachse (T) entfernt liegende Stellen von Außenkonturen des Messobjekts auf beiden Seiten der Drehachse (T) gleich weit von der Drehachse (T) entfernt befinden.

11. Verfahren nach dem vorhergehenden Anspruch, wobei das Messobjekt (1) vor der Aufnahme der Durchstrahlungsbilder relativ zu der Drehachse (T) zentriert wird.

12. Verfahren nach einem der vorhergehenden Ansprüche, wobei ein Teil der Positioniereinrichtung (5) ortsfest relativ zu der Drehachse (T) angeordnet ist.

13. Verfahren nach einem der Ansprüche 10 - 12, wobei durch Steuerung der Positioniereinrichtung (5) die Position des Messobjekts (1) automatisch korrigiert wird, wenn sich die am weitesten entfernt liegenden Stellen der Außenkonturen des Messobjekts (1) auf beiden Seiten der Drehachse (T) nicht gleich weit von der Drehachse (T) entfernt befinden.

## Claims

1. Measuring arrangement for computed tomography (CT), the measuring arrangement having the following:
- a radiation source (2) for generating an invasive radiation, in particular X-radiation,
- a rotating device (7) that is configured and arranged in such a way that a measurement object (1) can be rotated about an axis of rotation (T) of the rotating device (7), and that in this way the invasive radiation can penetrate the measurement object (1) from various directions, and
- a detection device (3) for detecting radiation that has penetrated the measurement object (1),
- a positioning device (5), the positioning device (5) having a setting device (17, 18, 19) that is configured to set a position of the measurement object (1) relative to the rotating device (7),
**characterized in that** the measuring arrangement is designed
a) to generate at least one preliminary radiation image of the measurement object from detection signals of the detection device (3),
b) to determine an image position of the axis of rotation (T) that corresponds to a radiation projection of the axis of rotation (T) onto the detection device (3) in the preliminary radiation image,
c) to determine by evaluating the preliminary radiation image whether points, lying farthest removed from the axis of rotation (T) in an image plane of the preliminary radiation image, of outer contours of the measurement object are located on both sides of the axis of rotation (T) equally far from the axis of rotation (T).

2. Measuring arrangement according to the preceding claim, in which the measuring arrangement has a control device for controlling the setting device, and in which the measuring arrangement is designed to automatically correct the position of the measurement object if the points, lying farthest removed, of the outer contours of the measurement object are located on both sides of the axis of rotation unequally far from the axis of rotation.

3. Measuring arrangement according to one of the preceding claims, in which the radiation source (2) is configured to generate a conical diverging radiation beam that is emitted in the direction of the detection device (3).

4. Measuring arrangement according to the preceding claims, in which a ray which is central with reference to the conical radiation beam crosses the axis of rotation (T) of the rotating device (7) in a perpendicular fashion.

5. Measuring arrangement according to one of the preceding claims, in which the positioning device (5) has a setting device (17, 18, 19) that is configured to set a position of the measurement object (1) relative to the rotating device (7).

6. Measuring arrangement according to the preceding claim, in which the setting device (17, 18, 19) has at least one positioning unit that is configured to set the position of the measurement object (1) only along a rectilinear axis.

7. Measuring arrangement according to the preceding claim, in which the setting device (17, 18, 19) has at least two and preferably three of the positioning units, and in which the rectilinear axes of the positioning units run transversely and preferably at right angles to one another.

8. Measuring arrangement according to one of the three preceding claims, in which the setting device (17, 18, 19) can be electrically actuated, at least one electric line having for the purpose of supplying the setting device with electric current an electric connection that connects a first part of the line, which is arranged in and/or on the rotating device (7), to a second part of the line, which is arranged in and/or on the positioning device (5).

9. Measuring arrangement according to one of the preceding claims, in which the setting device (17, 18, 19) can be electrically actuated, at least one electric line being provided for the purpose of supplying the setting device with electric current, the electric line leading via at least one electric sliding contact that in the event of an existing electric contact permits a movement of at least one part of the positioning device relative to another part of the positioning device (5) and/or relative to the rotating device (7).

10. Method for carrying out computed tomography (CT), in which a measurement object (1) is transradiated by invasive radiation, in particular X-radiation, in various rotary positions with reference to an axis of rotation (T), and at least one radiation image is recorded in each case, wherein a relative position of the measurement object (1) is varied relative to the axis of rotation (T) by setting a positioning device (5), wherein the radiation images are generated from detection signals of a detection device (3), and wherein
- at least one preliminary radiation image of the measurement object is evaluated before the recording of the radiation images, which are to be evaluated for an examination of the measurement object (1), from the detection signals,
- an image position of the axis of rotation (T) that corresponds to a radiation projection of the axis of rotation (T) onto the detection device (3) is determined in the preliminary radiation image, and
- it is determined by evaluation of the preliminary radiation image whether points, lying farthest removed from the axis of rotation (T) in an image plane of the preliminary radiation image, of outer contours of the measurement object are located on both sides of the axis of rotation (T) equally far from the axis of rotation (T).

11. Method according to the preceding claim, in which the measurement object (1) is centered relative to the axis of rotation (T) before the recording of the radiation images.

12. Method according to one of the preceding claims, in which a part of the positioning device (5) is arranged in a stationary fashion relative to the axis of rotation (T).

13. Method according to one of Claims 10-12, in which the position of the measurement object (1) is automatically corrected by controlling the positioning device (5) when the points, lying farthest removed, of the outer contours of the measurement object (1) are located on the two sides of the axis of rotation (T) unequally far from the axis of rotation (T).

## Revendications

1. Dispositif de mesure pour tomographie par ordinateur (CT), le dispositif de mesure présentant les éléments suivants :
- une source de rayonnement (2) pour générer un rayonnement invasif, en particulier, un rayonnement radiographique,
- un dispositif de rotation (7) qui est conçu et disposé de telle sorte qu'un objet de mesure (1) puisse tourner autour d'un axe de rotation (T) du dispositif de rotation (7) et que de cette façon, le rayonnement invasif puisse pénétrer dans l'objet de mesure (1) à partir de diverses directions, et
- un dispositif de détection (3) pour détecter le rayonnement qui a pénétré dans l'objet de mesure (1),
- un dispositif de positionnement (5), le dispositif de positionnement (5) présentant un dispositif de réglage (17, 18, 19) qui est conçu pour régler une position de l'objet de mesure (1) par rapport au sens de rotation (7),
**caractérisé en ce que** le dispositif de mesure est conçu pour
a) générer à partir de signaux de détection du dispositif de détection (3) au moins une image de rayonnement préalable traversant l'objet de mesure,
b) déterminer une position d'image de l'axe de rotation (T) qui correspond à une projection de rayonnement de l'axe de rotation (T) sur le sens de détection (3) dans l'image de rayonnement préalable,
c) déterminer par analyse de l'image de rayonnement préalable, si dans un plan d'image de l'image de rayonnement préalable, des sites de contours externes de l'objet de mesure se trouvant le plus loin de l'axe de rotation (T), des deux côtés de l'axe de rotation (T), sont aussi éloignés de l'axe de rotation (T).

2. Dispositif de mesure selon la revendication précédente, le dispositif de mesure présentant un dispositif de commande pour commander le dispositif de réglage, et le dispositif de mesure étant conçu de telle sorte que la position de l'objet de mesure soit corrigée automatiquement lorsque les sites des contours externes de l'objet de mesure qui se trouvent le plus loin, des deux côtés de l'axe de rotation, ne sont pas aussi éloignés de l'axe de rotation.

3. Dispositif de mesure selon l'une des revendications précédentes, dans lequel la source de rayonnement (2) est conçue pour générer un faisceau de rayons divergent conique qui est émis dans le sens du dispositif de détection (3).

4. Dispositif de mesure selon la revendication précédente, dans lequel un rayon central du faisceau de rayons de forme conique croise perpendiculairement l'axe de rotation (T) du sens de rotation (7).

5. Dispositif de mesure selon l'une des revendications précédentes, dans lequel le dispositif de positionnement (5) présente un dispositif de réglage (17, 18, 19) qui est conçu de façon à régler une position de l'objet de mesure (1) par rapport au sens de rotation (7).

6. Dispositif de mesure selon la revendication précédente, dans lequel le dispositif de réglage (17, 18, 19) présente au moins une unité de positionnement qui est conçue de façon à régler la position de l'objet de mesure (1) uniquement le long d'un axe droit.

7. Dispositif de mesure selon la revendication précédente, dans lequel le dispositif de réglage (17, 18, 19) présente au moins deux, de préférence trois des unités de positionnement et dans lequel les axes droits des unités de positionnement sont transversaux et de préférence, perpendiculaires les uns par rapport aux autres.

8. Dispositif de mesure selon l'une des trois revendications précédentes, dans lequel le dispositif de réglage (17, 18, 19) peut être actionné électriquement, au moins une conduite électrique présentant, pour alimenter le dispositif de réglage avec un courant électrique, un raccordement électrique qui raccorde une première partie de la conduite qui est disposée dans et/ou sur le dispositif de rotation (7) avec une deuxième partie de la conduite qui est disposée dans et/ ou sur le dispositif de positionnement (5).

9. Dispositif de mesure selon l'une des revendications précédentes, dans lequel le dispositif de réglage (17, 18, 19) peut être actionné électriquement, au moins une conduite électrique étant prévue pour alimenter le dispositif de réglage avec un courant électrique, la conduite électrique passant par au moins un curseur électrique qui permet lorsqu'un contact électrique existe, un mouvement au moins d'une partie du dispositif de positionnement par rapport à une autre partie du dispositif de positionnement (5) et/ou du dispositif de rotation (7).

10. Procédé de réalisation d'une tomographie par ordinateur (CT), dans lequel un objet de mesure (1) est traversé dans différentes positions de rotation par rapport à un axe de rotation (T) par un rayonnement invasif, en particulier un rayonnement radiographique et respectivement au moins une image de rayonnement est enregistrée, une position relative de l'objet de mesure (1) par rapport à l'axe de rotation (T) étant modifiée par le réglage d'un dispositif de positionnement (5), les images de rayonnement étant générées à partir de signaux de détection d'un dispositif de détection (3) et dans lequel
- avant l'enregistrement des images de rayonnement qui doivent être analysées pour un examen de l'objet de mesure (1), à partir des signaux de détection, au moins une image de rayonnement préalable traversant l'objet de mesure est analysée,
- une position d'image de l'axe de rotation (T) qui correspond à une projection de rayon de l'axe de rotation (T) sur le dispositif de détection (3) est déterminée dans l'image de rayonnement préalable et
- en analysant l'image de rayonnement préalable, on détermine si, dans un plan d'image de l'image de rayonnement préalable, des sites de contours externes de l'objet de mesure se trouvant le plus loin de l'axe de rotation (T), des deux côtés de l'axe de rotation (T), sont aussi éloignés de l'axe de rotation (T).

11. Procédé selon la revendication précédente, dans lequel l'objet de mesure (1) est centré avant l'enregistrement des images de rayonnement par rapport à l'axe de rotation (T).

12. Procédé selon l'une des revendications précédentes, dans lequel une partie du dispositif de positionnement (5) est disposée fixement par rapport à l'axe de rotation (T).

13. Procédé selon l'une des revendications 10 à 12, dans lequel en commandant le dispositif de positionnement (5), la position de l'objet de mesure (1) est corrigée automatiquement, lorsque les sites des contours externes de l'objet de mesure (1) qui se trouvent le plus loin, des deux côtés de l'axe de rotation (T), ne sont pas aussi éloignés de l'axe de rotation (T).
